# EUROPÄISCHE PATENTSCHRIFT

(11) **EP 1 237 118 B1**
(45) Veröffentlichungstag und Bekanntmachung des Hinweises auf die Patenterteilung: **14.04.2004**
(21) Anmeldenummer: 02004572.0
(22) Anmeldetag: 27.02.2002
(51) Int. Cl.: G06K 9/62, G06F 9/44

(54) **Verfahren zum Spezifizieren, Ausführen und Analysieren von Verfahrensabläufen beim Erkennen**
Method for specifiying, executing and analysing processes during recognition
Méthode pour la spécification, l'execution et l'analyse de processus pendant la reconnaissance

(30) Priorität: 02.03.2001 DE 10110208
(43) Veröffentlichungstag der Anmeldung: 04.09.2002
(73) Patentinhaber: Siemens Dematic AG, 90475 Nürnberg (DE)
(72) Erfinder: Enghauser, Peter, 78467 Konstanz (DE); Seidel, Gert, 78465 Konstanz (DE)
(74) Vertreter: Berg, Peter, Dipl.-Ing.

(56) Entgegenhaltungen:
- US-A- 5 301 336
- ATKINS M S ET AL: "Role Of Visual Languages In Developing Image Analysis Algorithms" PROCEEDINGS OF 1994 IEEE SYMPOSIUM ON VISUAL LANGUAGES ST. LOUIS, MO, USA 4-7 OCT. 1994, LOS ALAMITOS, CA, USA,IEEE COMPUT. SOC, 4. Oktober 1994 (1994-10-04), Seiten 262-269, XP010099197 ISBN: 0-8186-6660-9
- KLINGLER J W ET AL: "VISUAL PROGRAMMING SYSTEM FOR DEVELOPMENT OF IMAGE PROCESSING APPLICATIONS" JOURNAL OF ELECTRONIC IMAGING, SPIE + IS&T, US, Bd. 1, Nr. 2, 1. April 1992 (1992-04-01), Seiten 192-202, XP000323342 ISSN: 1017-9909
- TEGOLO D ET AL: "DYNAMIC INTERFACE FOR MACHINE VISION SYSTEMS" PROCEEDINGS OF THE IAPR INTERNATIONAL CONFERENCE ON PATTERN RECOGNITION. JERUSALEM, OCT. 9 - 13, 1994. CONFERENCE C: SIGNAL PROCESSING / CONFERENCE D: PARALLEL COMPUTING, LOS ALAMITOS, IEEE COMP. SOC. PRESS, US, Bd. 3 CONF. 12, 9. Oktober 1994 (1994-10-09), Seiten 323-326, XP000509970 ISBN: 0-8186-6277-8

## Beschreibung

Die Erfindung betrifft ein Verfahren zum Spezifizieren, Ausführen und Analysieren von Verfahrensabläufen beim Erkennen von Sendungsaufschriften und Formulareintragungen.

Die Erkennung erfolgt mit Hilfe von OCR-Lesesystemen und Videokodiersystemen, wobei im Falle nicht eindeutiger Leseergebnisse des OCR-Lesesystems die entsprechenden Abbilder der Sendungsaufschriften oder Formulare an Videokodierplätze übertragen werden, wo eine manuelle bzw. teilmanuelle Kodierung mit unterschiedlichen Kodierschritten unter Verwendung von Datenbanken der Aufschriften erfolgt. Die zu lesenden Aufschriften auf den Sendungen sind zum großen Teil Adressen und als Datenbanken werden Adress- oder Nachsendewörterbücher eingesetzt. Mit dem festgelegten Verfahrensablauf als wesentlicher Bestandteil der Ablaufsteuerung wird der Ablauf der Bearbeitung jeder einzelnen Sendung oder jedes Formulars überwacht und gesteuert.

Der Verfahrensablauf definiert für jede Sendung oder jedes Formular die Abfolge der einzelnen Bearbeitungsschritte und die endgültige Entscheidung, was mit der Sendung oder dem Formular im Gesamtsystem geschehen soll. Bei allen Entscheidungen werden alle für die Entscheidung relevanten Informationen ausgewertet, die diesem Zeitpunkt vorliegen. Die für die Entscheidungen relevanten Informationen sind z. B. Angaben über den Typ der Sortiermaschine, den Typ der einzelnen Kodiergeräte und bisher vorliegende Erkenntnisergebnisse. Wenn alle erforderlichen Schritte ausgeführt sind, wird die Übermittlung des Ergebnisses an die Sortiermaschine veranlasst, damit die Sendung oder das Formular entsprechend diesem Ergebnis verteilt werden kann.

Bisher wurde zur Beschreibung und Realisierung gattungsgemäßer Verfahrensabläufe ein regelbasierter Ansatz eingesetzt. In Abhängigkeit vom Anwendungsfall können daher Hunderte von Regeln zur Beschreibung aller möglichen Abläufe notwendig sein. Diese umfangreichen Regelwerke waren jedoch nur sehr schwer wartbar und selbst kleine Änderungen hatten unvorhersehbare Auswirkungen oder führten zu einer erheblichen Steigerung der Anzahl der Regeln. Die Spezifizierung und die Analyse der Regeln auf Konsistenz und Vollständigkeit erforderte einen sehr hohen Aufwand.

Der Erfindung liegt daher die Aufgabe zugrunde, ein Verfahren zu schaffen, mit dem der Aufwand beim Spezifizieren und Analysieren gattungsgemäßer Verfahrensabläufe stark reduziert wird. Erfindungsgemäß wird die Aufgabe durch die Merkmale des Anspruches 1 gelöst.

Durch die erfindungsgemäße graphische Darstellung als Flussdiagramm der Verfahrensabläufe mit Attributen und Funktionsangaben, die automatische Umwandlung in ein ladbares Modul, das entsprechend des jeweiligen Bearbeitungsschrittes aufgerufen wird und die Analyse anhand der übersichtlichen Darstellung wird der benötigte Aufwand zum Spezifizieren und Analysieren der Verfahrensabläufe insbesondere in Testphasen erheblich reduziert.

Vorteilhafte Ausgestaltungen der Erfindung sind in den Unteransprüchen dargestellt.

So ist es vorteilhaft, zusätzlich zu den Attributen auch Wertebereiche und Kommentare einzugeben.

Vorteilhaft ist es auch, in die Attributsdatei zusätzlich zu den aktuellen Werten zugehörige Referenzen zu den Namen, Kommentaren und/oder zu den betreffenden Elementen / Bearbeitungsschritten des Flussdiagramms einzutragen.

In einer weiteren vorteilhaften Weiterbildung wird bei der Analyse in dem dargestellten Flussdiagramm der aktuelle Verfahrensschritt markiert.

Zur verbesserten Übersichtlichkeit ist es auch vorteilhaft, die Attribute und Kommentare des aktuellen markierten Verfahrensschrittes darzustellen.

Die vorstehenden vorteilhaften Ausgestaltungen erleichtern das Analysieren der Verfahrensabläufe.

Vorteilhaft ist es auch, während der Analyse die Parameter der Variablen und/oder Funktionen online zu verändern und in das Flussdiagramm einzutragen.

Nachstehend wird die Erfindung anhand der Zeichnungen in einem Ausführungsbeispiel näher erläutert.

Dabei zeigen
- FIG 1 a und b: ein Flussdiagramm (Ausschnitt) als graphische Beschreibung eines Verfahrensablaufes zum Videokodieren einer Sendungsadresse.
- FIG 2: eine Bildschirmdarstellung für eine offline-Analyse zum obigen Flussdiagramm.

Das hier beschriebene System bietet auf Basis gezeichneter Flussdiagramme eine integrierte graphische Entwicklungsumgebung für die Spezifizierung, Ausführung und Analyse von Verfahrensabläufen zum Erkennen (automatisches Lesen und/oder Videokodieren) von Sendungsaufschriften und Formulareintragungen. Diese integrierte graphische Entwicklungsumgebung beinhaltet die'graphische Beschreibung der Abläufe, die Erzeugung der Laufzeitumgebung und geeignete Tools für Test und Diagnose der Abläufe.

Im Einzelnen werden folgende Funktionen unterstützt:
1. Erfassung und Änderung der graphischen Beschreibung des Verfahrensablaufes (hier mit Hilfe des Office Zeichenprogramms VISIO von Microsoft),
2. rechnergestütze automatische Generierung von Programmkode (hier C++ Kode) aus der graphischen Beschreibung,
3. Tools für Analyse (Diagnose und Debugging) auf der Ebene der originalen Zeichnung (Debugging und Trace Tools).

Während der gesamten Bearbeitung bleiben die gezeichneten Ablaufdiagramme die einzige Programmquelle, d.h. alle generierten Teile stellen nur ein Mittel zum Zweck dar und müssen vom Anwender nicht gepflegt werden. Die Tools für die Analyse (Diagnose und Debugging) arbeiten ebenfalls mit einem direkten Zugriff auf die graphische Beschreibung.

Im Folgenden wird als Anwendungsbeispiel der Verfahrensablauf beim Videokodieren von Sendungsadressen (Kodierstrategie) dargestellt.

Die Kodierstrategie wird durch eine oder mehrere Zeichnungen auf Basis von standardisierten Zeichnungselementen in Anlehnung an ISO Flussdiagramme beschrieben. Zusätzlich werden in den Zeichnungen Attribute und Funktionen definiert (z.B. als spezielle Tabellen). Attribute und Funktionen definieren die Details des Einflusses einzelner Variablen und deren aktueller Werte auf den Ablauf der Kodierstrategie.

Attribute werden durch einen Namen und einen Typ definiert. Es werden die Typen "Text" und "Zahl" unterstützt. Zusätzlich können für jedes Attribut noch ein Wertebereich und ein Kommentar angegeben werden. Der Wertebereich beschreibt die Menge der möglichen Werte eines Attributes und in den Kommentaren sollten die Bedeutungen der Attribute erläutert werden. Dadurch ist es später bei der Analyse möglich, die Kommentare automatisch den aktuellen Werten zuzuordnen, was die Verständlichkeit bei der Analyse enorm erhöht.

Attribute werden entweder über das Interface der Kodierstrategie als Input aus dem Rahmenprogramm bereitgestellt oder haben für die Kodierstrategie lokalen Charakter (z.B. für die Speicherung von Zwischenergebnissen).

Bei Funktionen werden ebenfalls zwei Arten unterschieden. Entweder sind Funktionen innerhalb der Kodierstrategie definiert (lokale Funktionen) oder sie sind Bestandteil des Rahmenprogramms und werden von der Kodierstrategie mit den aktuellen Parametern aufgerufen.

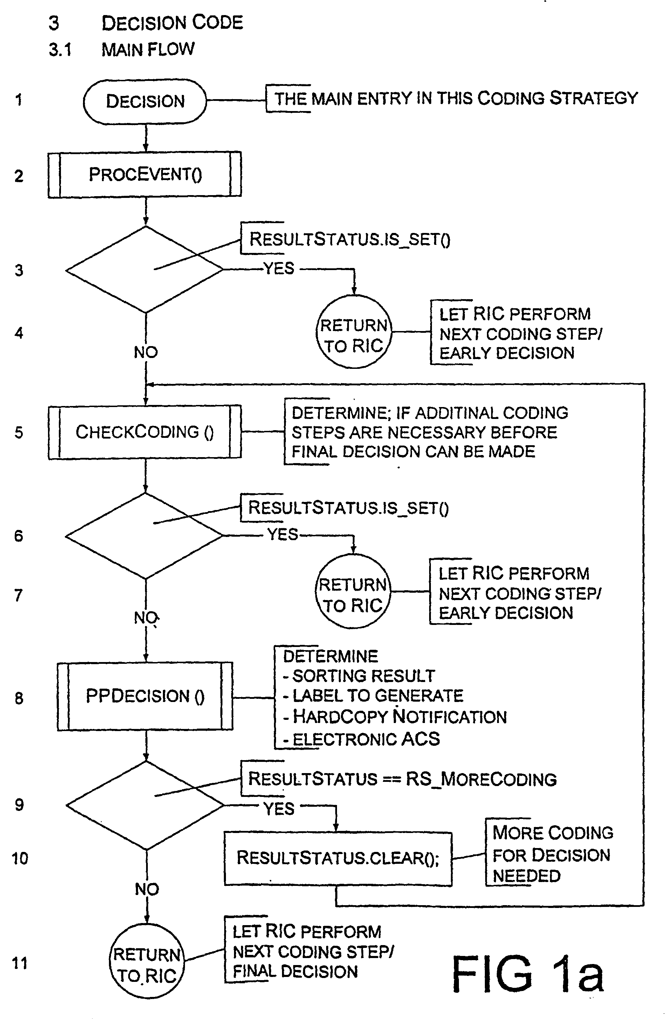

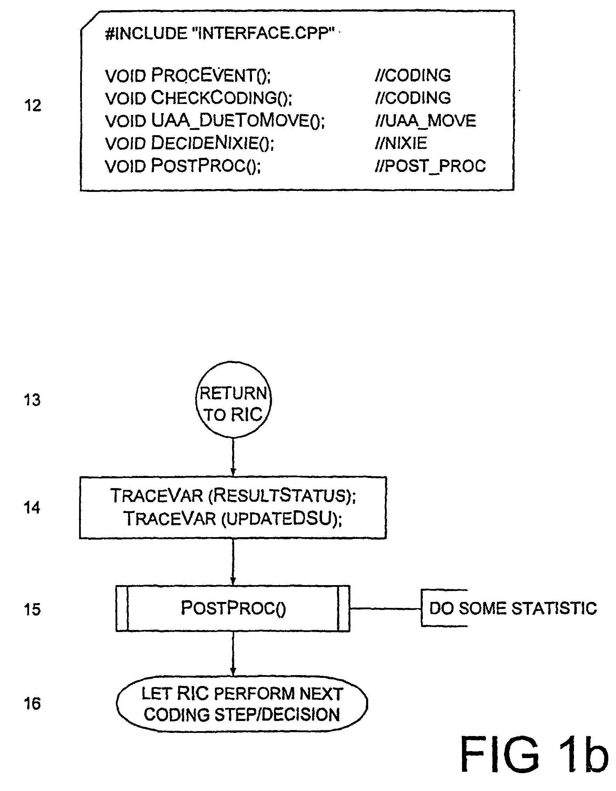

In der FIG 1 wird als Beispiel ein Ausschnitt aus dem Verfarensablauf (Kodierstrategie) zum Videokodieren von Sendungsadressen dargestellt.

Eine Erläuterung hierzu erfolgt in der folgenden Tabelle.

**Tab. 1**

| Bezugszeichen Nr. | Beschreibung |
|---|---|
| 1. | Start der Funktion DECISION, das ist die Hauptfunktion dieser Kodierstrategie |
| 2. | Aufruf der Funktion PROC EVENT, diese Funktion ist im Rahmenprogramm definiert (siehe Kommentar 12) |
| 3. | Prüfen, ob Attribut RESULT STATUS gesetzt ist |
| 4. | Sprung zur Fortsetzungsmarke RETURN TO RIC |
| 5. | Aufruf der Funktion CHECK CODING, ermittelt welche weiteren Kodierschritte ausgeführt werden müssen |
| 6. | Prüfen, ob Attribut RESULT STATUS gesetzt ist |
| 7. | Sprung zur Fortsetzungsmarke RETURN TO RIC |
| 8. | Aufruf der Funktion PP DECISION, ermittelt alle Merkmale des Sortierergebnisses |
| 9. | Prüfen, ob Attribut RESULT STATUS = RS_MORE CODING d.h. prüft ob weitere Kodierschritte notwendig sind |
| 10. | Setzt Attribut RESULT STATUS zurück |
| 11. | Sprung zur Fortsetzungsmarke RETURN TO RIC |
| 12. | Liste der Funktionen des Rahmenprogramms, die aus der Kodierstrategie aufgerufen werden |
| 13. | Fortsetzungsmarke RETURN TO RIC |
| 14. | Aufruf der Funktionen TRACE VAR für die Attribute RESULT STATUS und UPDATE DSU |
| 15. | Aufruf der Funktion POST PROC, bearbeitet Statistiken |
| 16. | Rückkehr zum Rahmenprogramm, anschließend kann die nächste Entscheidung der Kodierstrategie aufgerufen werden |

Die durch das Flussdiagramm vollständig beschriebene Kodierstrategie wird eingelesen und in eine interne Repräsentation überführt (durch VISIO mittels Automation). Aus dieser internen Repräsentation wird Programmkode (C++ Quellkode) für die Kodierstrategie generiert. Mit Hilfe des C-Compilers wird dann ein ladbares Modul erzeugt, das vom Rahmen der Kodierstrategie aufgerufen wird. Die Kodiersträtegie wird bei allen .Änderungen der Attribute einer Sendung aufgerufen und der weitere Ablauf wird neu bestimmt.

Neben dem generierten Kode des eigentlichen Verfahrenablaufes wird zusätzlich Kode zur Erzeugung von Traceobjekten generiert, der während der Laufzeit der Kodierstrategie die Aufzeichnung von Diagnoseinformationen steuert. Die Traceobjekte enthalten alle Informationen zu den Attributen (aktuelle Werte, Bezug zu Namen und Kommentaren) und eine eindeutige Referenz zu den ursprünglichen Elementen des Flussdiagramms.

Während die Kodierstrategie ausgeführt wird, werden für jeden Aufruf diese Traceobjekte zusammen mit den Werten der Attribute in einem Tracepuffer pro Sendung abgelegt. Wenn die Tracefunktion für die Kodierstrategie aktiviert ist, werden die Tracepuffer für eine spätere Analyse in einer Attributsdatei gespeichert, nachdem eine Sendung durch das Kodiersystem vollständig bearbeitet wurde. Ist die Tracefunktion nicht aktiv, dann werden die Tracepuffer nicht gespeichert.

Zu dem hier betrachteten Beispiel (FIG 1) sind nachfolgend Ausschnitte des generierten C++ Kodes dargestellt.

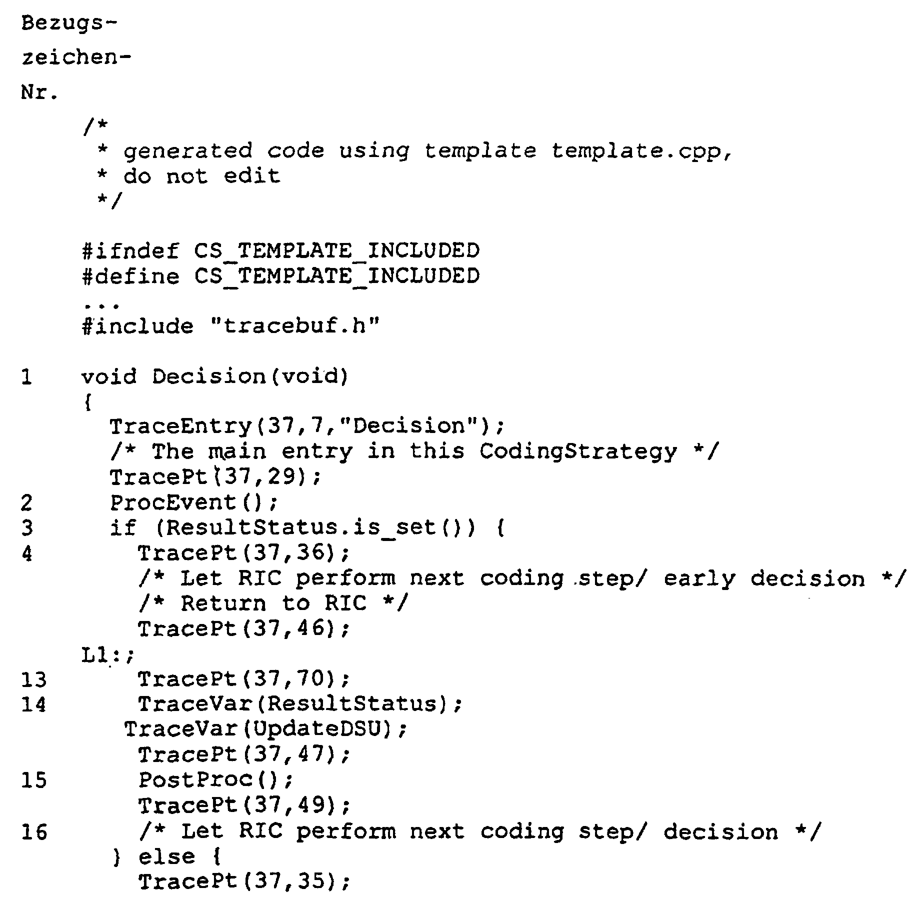

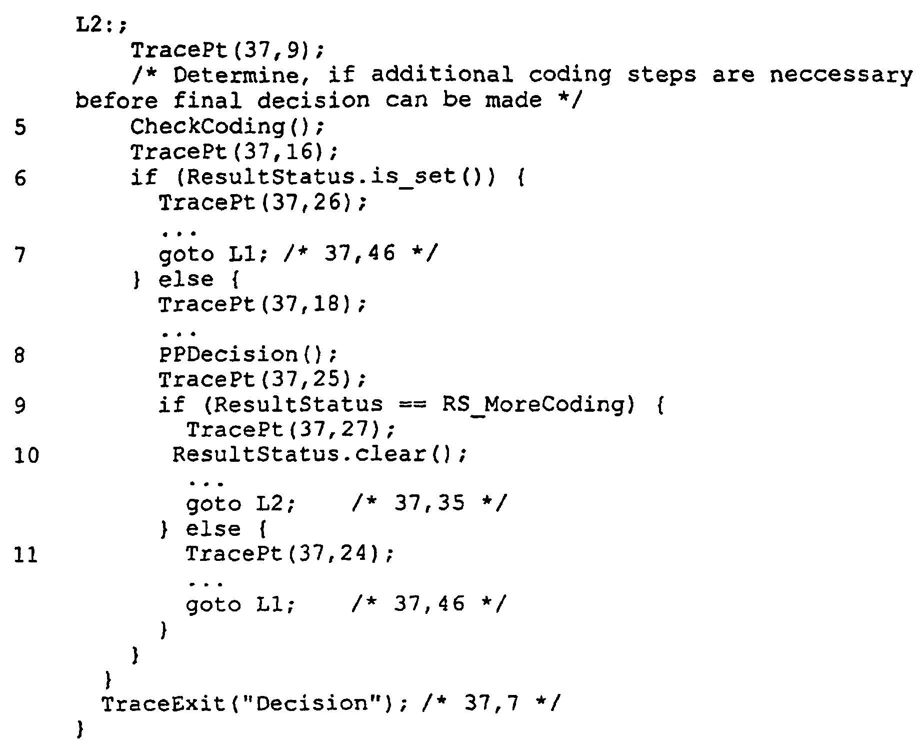

Die in der Attributsdatei aufgezeichneten Tracepufferdaten können für die detaillierte Analyse des durch die Kodierstrategie gesteuerten Ablaufes der Bearbeitung jeder Sendung genutzt werden.

Über ein spezielles User Interface werden dem Anwender die Informationen aus dem aufgezeichneten Tracepuffer zusammen mit dem zugehörigen originalen Flussdiagramm der Kodierstrategie dargestellt.

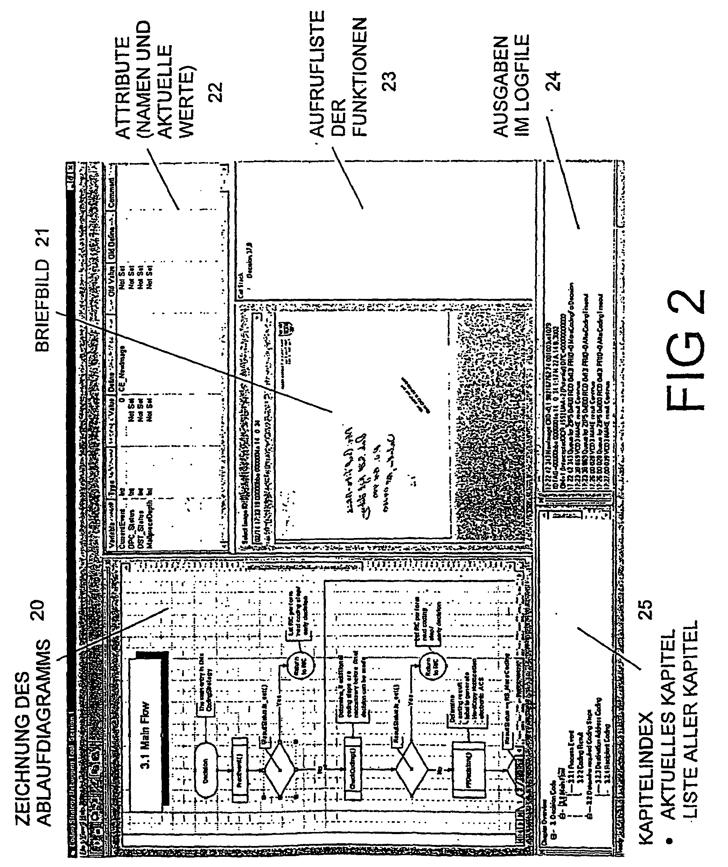

Bei der Offline Analyse kann der Ablauf aller Bearbeitungsschritte einer Sendung nachvollzogen werden. Dabei werden dem Anwender die ausgeführten Schritte in dem originalen Flussdiagramm der Kodierstrategie mit allen für die Analyse relevanten Informationen dargestellt. Für die Analyse der Abläufe einer Kodierstrategie werden dem Anwender gemäß FIG 2 folgende Informationen in einzelnen Fenstern dargestellt:
- Zeichnung des Flussdiagramms, die aktuelle Position innerhalb der originalen Zeichnung der Kodierstrategie wird markiert, 20,
- das Bild der Sendung, 21,
- Informationen zu den Attributen (bezogen auf den Bearbeitungsschritt werden die jeweils aktuellen Werte der Attribute dargestellt), 22,
- Aufrufliste bei Funktionsaufrufen, 23,
- Kapitelindex, Nummer des aktuellen Kapitels der Zeichnung (Kapitel und Unterkapitel der aktuellen Position) und Liste aller Kapitel, 25,
- optional zusätzliche Logfile Ausgaben, 24.

Der Anwender hat nun die Möglichkeit, den im Tracepuffer gespeicherten Ablauf der Bearbeitung der jeweiligen Sendung nachzuvollziehen. Dabei hat er wie mit einem Source-Level Debugger die Möglichkeit, durch den Tracepuffer zu navigieren.

Es werden die üblichen Kommandos eines Source-Level Debugger unterstützt:
- Benutzung von Break-Punkten,
- Step-In,
- Step-Over,
- Step-Out usw.

In der graphischen Darstellung der Kodierstrategie (VISIO-Flussdiagramm) wird der jeweils aktuelle Schritt markiert. Der Anwender sieht, wie die Markierung mit der Ausführung der einzelnen Schritte durch die Zeichnung geführt wird. Bei jedem Schritt werden für alle Attribute Werte sowie Kommentare zu den aktuellen Werten dargestellt. Damit stehen dem Anwender für jede aufgezeichnete Sendung alle zur Analyse der Abläufe der Kodierstrategie notwendigen Informationen zur Verfügung, d.h. alle Abläufe können nachträglich im Detail analysiert werden.

Dieses Verfahren bietet die Möglichkeit einer detaillierten Analyse bezogen auf jede einzelne Sendung, die in dem System bearbeitet wurde. Auch nachdem eine sehr große Anzahl von Sendungen bearbeitet wurde, kann die Analyse noch Stunden nach der eigentlichen Bearbeitung der Sendungen vorgenommen werden. Mit diesem Diagnosewerkzeug können selbst hoch komplexe Kodierstrategien analysiert werden und im Falle von fehlerhaften Entscheidungen auf diesem Weg die speziellen Fehlerursachen ermittelt werden.

Das beschriebene Verfahren ist auch für Online Tests geeignet. Bei Online Tests kann eine in der Entwicklung befindliche Kodierstrategie schrittweise ausgeführt und getestet werden. Dabei kann der Anwender über das User Interface der Entwicklungsumgebung mit einem speziellen Kommando in der gezeichneten Kodierstrategie einen Break-Punkt definieren. Bei Erreichen des Break-Punktes wird das Bild der gerade bearbeiteten Sendung im User Interface aufgeschaltet und der aktuelle Tracepuffer wird wie zuvor beschrieben benutzt, um den Ablauf bis zur aktuellen Situation darzustellen und detailliert zu analysieren. Anders als bei der Offline Analyse können hierbei zusätzlich die Attribute auch verändert werden und damit der weitere Ablauf beeinflußt werden. Nach der Analyse kann die Bearbeitung fortgesetzt werden (eventuell bis zum nächsten Break-Punkt).

## Patentansprüche

1. Verfahren zum Spezifizieren, Ausführen und Analysieren von Verfahrensabläufen beim Erkennen von Sendungsaufschriften und Formulareintragungen, **dadurch gekennzeichnet, dass** in der Spezifizierungsphase die Verfahrensabläufe als Flussdiagramme mit Attributen und Funktionsangaben, die den Einfluss einzelner Variabler auf den Verfahrensablauf definieren, in ein Computersystem in graphischer Form eingegeben werden, wobei aus den Flussdiagrammen automatisch Kodes als interne Repräsentation generiert werden, die mittels eines Compilers in ein ladbares, ausführbares Modul überführt wird, das in der Abarbeitungsphase zum Erkennen der jeweiligen Sendungsaufschrift oder Formulareintragung für jeden Bearbeitungsschritt aufgerufen wird, dass in der Abarbeitungsphase zum Erkennen für jeden Bearbeitungsschritt Informationen zur Beschreibung des jeweils aktuellen Ablaufs und die aktuellen Werte der Attribute in eine Attributsdatei geschrieben werden und dass in der späteren Analysephase zur Rekonstruktion der einzelnen Bearbeitungsschritte während der Abarbeitungsphase der Verlauf der Bearbeitung jeder Sendung oder jedes Formulars in den Flussdiagrammen mit den Attributen zusammen mit den dazugehörigen Abbildern der Sendungsaufschriften oder Formulareintragungen dargestellt werden, wobei die Attribute die aktuellen Werte aus der Attributsdatei für die jeweilige Sendungsaufschrift oder Formulareintragung zeigen.

2. Verfahren nach Anspruch 1, **dadurch gekennzeichnet, dass** zu den Attributen zusätzlich noch Wertebereiche und Kommentare eingegeben werden.

3. Verfahren nach Anspruch 1, **dadurch gekennzeichnet, dass** in die Attributsdatei zusätzlich zu den aktuellen Werten der Attribute Referenzen zu den dazugehörenden Namen und Kommentaren eingetragen werden.

4. Verfahren nach Anspruch 1 oder 3, dadurch gezeichnet, dass in die Attributsdatei zusätzlich zu den aktuellen Werten der Attribute jeweils eine Referenz zu den betreffenden Elementen des Flussdiagramms eingetragen wird.

5. Verfahren nach Anspruch 1, **dadurch gekennzeichnet, dass** bei der Analyse in dem dargestellten Flussdiagramm der aktuelle Verfahrensschritt markiert wird.

6. Verfahren nach Anspruch 5, **dadurch gekennzeichnet, dass** bei der Analyse die Attribute und Kommentare des aktuellen, markierten Verfahrensschrittes dargestellt werden.

7. Verfahren nach Anspruch 1, **dadurch gekennzeichnet, dass** während der online Analyse zum Testen von Abläufen die Werte der Variablen und/oder Parameter der Funktionen online verändert werden und dadurch der Ablauf beeinflusst wird.

## Claims

1. Method for specifying, executing and analysing method sequences for the recognition of dispatch labels and form entries, **characterized in that**, in the specification phase, the method sequences are input in graphical form into a computer system as flowcharts with attributes and function details which define the influence of individual variables on the method sequence, with codes being automatically generated from the flowcharts as an internal representation which is converted by means of a compiler into a loadable, executable module which is called for each processing step in the handling phase for recognizing the respective dispatch label or form entry, **in that**, in the handling phase for recognition, information for describing the particular current sequence and the current values of the attributes is written to an attribute file for each processing step, and **in that**, in the later analysis phase, the individual processing steps during the handling phase are reconstructed by displaying the course of processing for each dispatch or each form in the flowcharts with the attributes together with the associated images of the dispatch labels or form entries, with the attributes showing the current values from the attribute file for the respective dispatch label or form entry.

2. Method according to Claim 1, **characterized in that** not only the attributes but also value ranges and comments are entered.

3. Method according to Claim 1, **characterized in that** not only the current values of the attributes but also references relating to the associated names and comments are entered into the attribute file.

4. Method according to Claim 1 or 3, **characterized in that** not only the current values of the attributes but also a respective reference relating to the relevant elements in the flowchart is entered into the attribute file.

5. Method according to Claim 1, **characterized in that**, during analysis, the current method step is marked in the displayed flowchart.

6. Method according to Claim 5, **characterized in that**, during analysis, the attributes and comments of the current, marked method step are displayed.

7. Method according to Claim 1, **characterized in that**, during online analysis, sequences are tested by changing the values of the variables and/or parameters of the functions online, which influences the sequence.

## Revendications

1. Procédé pour la spécification, l'exécution et l'analyse de processus lors de la reconnaissance d'inscriptions sur des envois et d'enregistrements dans des formulaires, **caractérisé par le fait que** pendant la phase de spécification, les processus sont entrés sous forme graphique dans un système informatique en tant qu'organigrammes avec des attributs et des indications de fonctions qui définissent l'influence de variables individuelles sur le processus, des codes étant produits automatiquement à partir des organigrammes comme représentation interne qui est transférée au moyen d'un compilateur dans un module chargeable et exécutable qui est appelé pendant la phase d'exécution pour la reconnaissance de l'inscription d'envoi respective ou de l'enregistrement de formulaire respectif pour chaque étape de traitement, pendant la phase d'exécution en vue de la reconnaissance, pour chaque étape de traitement, des informations pour la description de l'opération respectivement actuelle et les valeurs actuelles des attributs sont écrites dans un fichier d'attributs et, pendant la phase d'analyse ultérieure en vue de la reconstitution des différentes étapes de traitement pendant la phase d'exécution, le déroulement du traitement de chaque envoi ou de chaque formulaire est représenté dans les organigrammes avec les attributs conjointement aux images associées des inscriptions d'envois ou des enregistrements de formulaires, les attributs montrant alors les valeurs actuelles provenant du fichier d'attributs pour l'inscription d'envoi respective ou pour l'enregistrement de formulaire respectif.

2. Procédé selon la revendication 1, **caractérisé par le fait qu'**on indique en plus, pour les attributs, des domaines de valeurs et des commentaires.

3. Procédé selon la revendication 1, **caractérisé par le fait qu'**on enregistre dans le fichier d'attributs, en plus des valeurs actuelles des attributs, des références aux noms associés et aux commentaires associés.

4. Procédé selon la revendication 1 ou 3, **caractérisé par le fait qu'**on enregistre dans le fichier d'attributs, en plus des valeurs actuelles des attributs, à chaque fois une référence aux éléments concernés de l'organigramme.

5. Procédé selon la revendication 1, **caractérisé par le fait que**, lors de l'analyse, on marque l'étape de traitement actuelle dans l'organigramme représenté.

6. Procédé selon la revendication 5, **caractérisé par le fait que**, lors de l'analyse, on représente les attributs et les commentaires de l'étape de traitement actuelle marquée.

7. Procédé selon la revendication 1, **caractérisé par le fait que**, pendant l'analyse en ligne, on modifie en ligne les valeurs des variables et/ou des paramètres des fonctions afin de tester des processus et on influence ainsi le processus.
